# EUROPÄISCHE PATENTANMELDUNG

(11) **EP 1 762 880 A1**
(43) Veröffentlichungstag der Anmeldung: **14.03.2007**
(21) Anmeldenummer: 06117938.8
(22) Anmeldetag: 27.07.2006
(51) Int. Cl.: G02B 27/01

(54) **Einrichtung zur Darstellung eines Bildes im Blickfeld eines Fahrzeugführers**

(30) Priorität: 12.09.2005 DE 102005043159
(71) Anmelder: ROBERT BOSCH GMBH, 70442 Stuttgart (DE)
(72) Erfinder: Koenig, Winfried, 76327 Pfinztal (DE); Eschler, Johannes, 71254 Ditzingen (DE); Hauk, Markus, 71696 Moeglingen (DE); Guenther, Clemens, 76275 Ettlingen (DE); Engeln, Arnd, 72072 Tuebingen (DE); Grimm, Dietmar, 71696 Moeglingen (DE)

(57) **Zusammenfassung**

Bei einer Einrichtung zur Darstellung eines Bildes im Blickfeld eines Fahrzeugführers, wobei sich das von einer Bildwiedergabeeinrichtung wiedergegebene Bild in der Frontscheibe des Fahrzeugs spiegelt, ist vorgesehen, dass das wiedergegebene Bild derart angeordnet ist, dass das gespiegelte Bild oberhalb von für den Fahrzeugführer sichtbare von Scheinwerfern beleuchteten Objekten sichtbar ist.

## Beschreibung

Die Erfindung betrifft eine Einrichtung zur Darstellung eines Bildes im Blickfeld eines Fahrzeugführers, wobei sich das von einer Bildwiedergabeeinrichtung wiedergegebene Bild in der Frontscheibe des Fahrzeugs spiegelt.

### Stand der Technik

Um zu verhindern, dass zum Ablesen von Instrumenten ein Pilot den Blick von dem Flugraum vor dem Flugzeug abwenden muss, sind sogenannte Head-up-Displays bekannt geworden, bei denen die entsprechende Information in das Gesichtsfeld des Piloten über die Frontscheibe eingeblendet wird. Mit zunehmendem Informationsbedarf sind solche Bemühungen auch bei Kraftfahrzeugen bekannt geworden. Insbesondere wenn die zusätzlichen Informationen aus Bildern bestehen - solche, die die reale Umwelt wiedergeben, oder künstliche -, nehmen solche Abbildungen eine nicht zu vernachlässigende Fläche ein und interferieren gegebenenfalls mit dem vom Fahrzeugführer direkt wahrgenommenen Bild der Fahrbahn. Dies stört insbesondere bei Nachtfahrten.

Aufgabe der vorliegenden Erfindung ist es, derartige Störungen zu vermeiden und eine schlüssige Zuordnung des gespiegelten, d.h. virtuellen Bildes, mit dem real wahrgenommenen Bild zu ermöglichen.

Vorteile der Erfindung

Diese Aufgabe wird erfindungsgemäß dadurch gelöst, dass das wiedergegebene Bild derart angeordnet ist, dass das eingeblendete Bild oberhalb von für den Fahrzeugführer sichtbaren von Scheinwerfern beleuchteten Objekten sichtbar ist.

Durch die Erfindung wird eine Beeinträchtigung der direkten Sicht auf die beleuchtete Fahrbahn vermieden, was insbesondere besonders vorteilhaft ist, wenn gemäß einer vorteilhaften Ausgestaltung der Erfindung das Bild von einem in Fahrtrichtung gerichteten Nachtsichtgerät aufgenommen wird.

Diese Ausgestaltung kann insbesondere dadurch weitergebildet werden, dass mindestens ein Teil des aufgenommenen Bildes einen Teil der Fahrbahn vor dem Fahrzeug zeigt, der vor dem von den Scheinwerfern beleuchteten Teil der Fahrbahn liegt. Die Erfindung geht davon aus, dass das aufgenommene Bild erforderlichenfalls in vielfältiger Weise digital verarbeitet werden kann und dass es im Rahmen der Erfindung durchaus möglich ist, ein größeres Bild aufzunehmen, als dann tatsächlich wiedergegeben wird.

Ein Vorteil der Erfindung besteht bereits darin, dass das gespiegelte Bild in einem Teil des Blickfeldes des Fahrzeugführers angeordnet ist, in welchem in der Regel kein Objekt unmittelbar sichtbar ist, eine Wahrnehmung eines solchen Objektes also nicht gestört wird. Ein besonderer Vorteil ergibt sich jedoch dadurch, dass die Lage und/oder Größe des gespiegelten Bildes derart sind, dass das gespiegelte Bild als Fortsetzung des unmittelbar sichtbaren Bildes sichtbar ist.

Bei der Positionierung des gespiegelten Bildes ist es durchaus möglich, von Erfahrungswerten auszugehen, nämlich das gespiegelte Bild dort sichtbar zu machen, wo erfahrungsgemäß keine beleuchteten Objekte sichtbar sind. Es ist jedoch auch eine Anpassung an die tatsächlich vorliegenden Beleuchtungsverhältnisse gemäß einer Weiterbildung der Erfindung dadurch möglich, dass die Lage des gespiegelten Bildes von der durch die jeweilige Beleuchtung durch die Scheinwerfer gegebenen Helldunkelgrenze abhängt. Dabei kann vorgesehen sein, dass die Stellung eines Abblendschalters die Abhängigkeit bewirkt oder dass die Abhängigkeit durch Bildverarbeitungsalgorithmen bewirkt wird.

Um zu vermeiden, dass beide aneinander angepasste Bilder bei einer Lageveränderung der Augen des Fahrzeugführers miteinander verschoben werden, kann bei einer anderen Weiterbildung vorgesehen sein, dass die Lage und/oder Größe des gespiegelten Bildes in Abhängigkeit von der mit Hilfe eines Sensors ermittelten Position der Augen des Fahrzeugführers gesteuert werden.

Eine einfache Möglichkeit zur Verschiebung des zu spiegelnden Bildes ohne aufwändige und gegebenenfalls wartungsbedürftige mechanische Teile kann gemäß einer vorteilhaften Ausgestaltung dadurch erfolgen, dass das wiedergegebene Bild kleiner als die Bildfläche der Bildwiedergabeeinrichtung ist und auf dieser verschiebbar ist.

Außer einer Aufnahme einer realen Szene kann bei der erfindungsgemäßen Einrichtung auch vorgesehen sein, dass das wiedergegebene Bild synthetische Graphikelemente enthält.

Solche Graphikelemente können beispielsweise durch Auswertung des aufgenommenen Bildes entstehen, beispielsweise im aufgenommenen Bild nur schwach erkennbare Verkehrszeichen durch deutliche und gegebenenfalls farbig wiedergegebene Symbole ersetzt werden.

### Zeichnung

Die Erfindung lässt zahlreiche Ausführungsformen zu. Mehrere davon sind schematisch in der Zeichnung anhand mehrerer Figuren dargestellt und nachfolgend beschrieben. Es zeigt:
- Fig. 1: ein Fahrzeug mit der erfindungsgemäßen Einrichtung,
- Fig. 2: ein Blockschaltbild eines Ausführungsbeispiels,
- Fig. 3: eine schematische Darstellung der Ausleuchtung einer Fahrbahn vor dem Fahrzeug bei Abblendlicht,
- Fig. 4: eine Darstellung mit Einblendung eines Bildes des Nachtsichtgerätes und
- Fig. 5: ein Blockschaltbild eines weiteren Ausführungsbeispiels.

### Beschreibung der Ausführungsbeispiele

Die schematische Darstellung des vorderen Teils eines Personenkraftwagens 1, bei welchem die Windschutzscheibe 2 teilweise geschnitten dargestellt ist, zeigt die Lage der Augen 3 des Fahrzeugführers, dessen Blickwinkel in vertikaler Richtung mit drei Strahlen 4, 5, 6 angedeutet ist. Auf einem Bildschirm 26 wird das vom Nachtsichtgerät aufgenommene Bild wiedergegeben. Dies kann durch eine Projektions-Einrichtung oder durch andere Bildwiedergabetechniken bewirkt werden, beispielsweise Plasma oder LCD-Displays. Der Fahrzeugführer sieht dann das gespiegelte bzw. eingeblendete (virtuelle) Bild 25' im oberen Bereich seines Blickfeldes zwischen den Strahlen 4, 5.

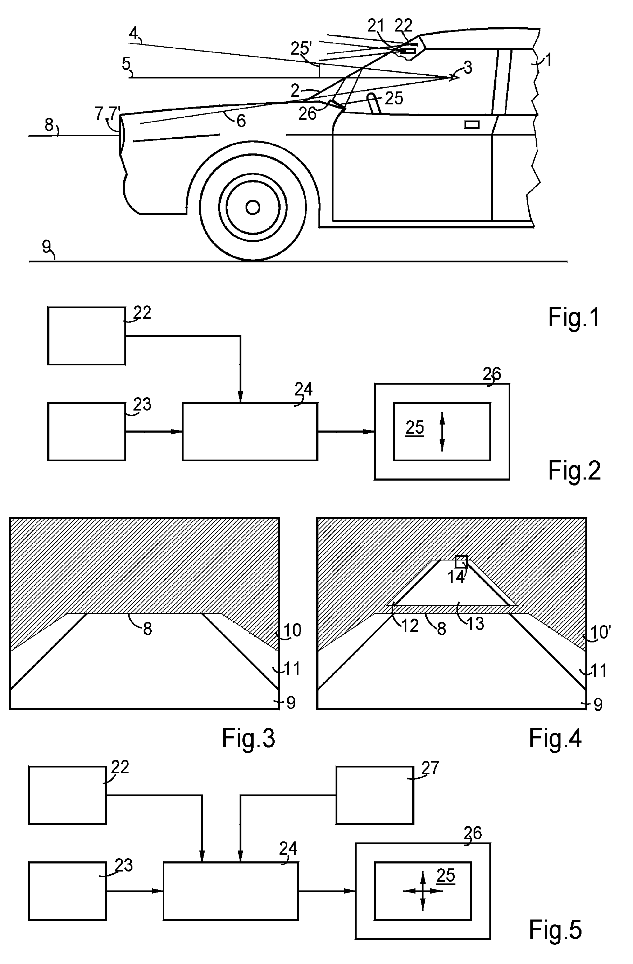

Scheinwerfer 7, von denen nur einer sichtbar ist, beleuchten die Fahrbahn 9 unterhalb einer Helldunkelgrenze 8. Zwischen den Strahlen 5, 6 sieht der Fahrer auf den beleuchteten Teil der Fahrbahn 9. Der nicht von den Scheinwerfern 7 erfasste Bereich 10 ist in den Figuren 3 und 4 schraffiert dargestellt. Die von den Scheinwerfern 7 insgesamt beleuchtete Fläche ist mit 11 bezeichnet.

Zur Erhöhung der Sicherheit bei Nachtfahrten ist das Fahrzeug 1 mit einem Nachtsichtgerät 21 ausgerüstet. Dieses kann ein sogenanntes passives Nachtsichtgerät sein, das auf Infrarotstrahlung von Objekten reagiert oder ein aktives, was über Infrarotscheinwerfer 7' verfügt. Letztere können im Bereich der Scheinwerfer 7 angeordnet oder mit denen kombiniert sein.

Bei der weiteren Erläuterung des Ausführungsbeispiels wird von einem aktiven Nachtsichtgerät ausgegangen, dessen Scheinwerfer 7' die Fahrbahn 9 vor dem von den Scheinwerfern 7 beleuchteten Teilstück ausleuchtet. Das somit aufgenommene Bild zeigt die mit dem Infrarotscheinwerfer 7' ausgeleuchtete Fläche 12, den darin befindlichen Teil 13 der Fahrbahn und ein Hindernis 14 (Fig. 4).

Fig. 4 zeigt einen dunklen Streifen zwischen dem vom Fahrzeugführer unmittelbar gesehenen Bild 9, 11 und dem gespiegelten Bild 12, 13, 14 des Nachtsichtgerätes. Bei einer festen Positionierung des gespiegelten Bildes kann je nach Leuchtweite der Scheinwerfer 7, 7' dieser Spalt verschieden groß sein. Es ist jedoch im Rahmen der Erfindung durch verschiedene Weiterbildungen möglich, die Position des gespiegelten Bildes derart zu steuern, dass es so gut wie möglich an das unmittelbar gesehene Bild anschließt.

Dazu ist beispielsweise gemäß Fig. 2 eine Detektion des ausgeleuchteten Bereichs bzw. der Helldunkelgrenze bei 22 vorgesehen. Der Block 23 stellt die Aufnahme des Nachtsichtbildes dar. In einem Produktionsmodul 24 wird dieses Bild durch die Wirkung der Detektion bei 22 derart vertikal verschoben, dass es an den ausgeleuchteten Bereich des vom Fahrer direkt gesehenen Bildes anschließt. Hierzu wird beispielsweise das wiedergegebene Bild 25 des Nachtsichtgerätes auf dem Bildschirm 26 vertikal verschoben.

Fig. 5 zeigt als Blockschaltbild eine andere Weiterbildung der Erfindung, bei welcher ein Detektor 27 zur Erkennung der Position der Augen des Fahrers vorgesehen ist. Solche Detektoren sind an sich bekannt und weisen eine Videokamera auf mit geeigneten Bilderkennungsprogrammen. Zusammen mit den Informationen zur Helldunkelgrenze aus Block 22 wird das Bild 25 sowohl in horizontaler als auch in vertikaler Richtung derart verschoben und gegebenenfalls auch in der Größe verändert, dass das direkte Bild und das gespiegelte Bild aneinander anschließen.

## Patentansprüche

1. Einrichtung zur Darstellung eines Bildes im Blickfeld eines Fahrzeugführers, wobei das von einer Bildwiedergabeeinrichtung wiedergegebene Bild in der Frontscheibe des Fahrzeugs eingeblendet ist, **dadurch gekennzeichnet, dass** das wiedergegebene Bild (25) derart angeordnet ist, dass das eingeblendete Bild (25') oberhalb von für den Fahrzeugführer sichtbaren, von Scheinwerfern (7) beleuchteten Objekten (9) sichtbar ist.

2. Einrichtung nach Anspruch 1, **dadurch gekennzeichnet, dass** das Bild von einem in Fahrtrichtung gerichteten Nachtsichtgerät (21) aufgenommen wird.

3. Einrichtung nach Anspruch 2, **dadurch gekennzeichnet, dass** mindestens ein Teil des aufgenommenen Bildes einen Teil der Fahrbahn (9) vor dem Fahrzeug (1) zeigt, der vor dem von den Scheinwerfern (7) beleuchteten Teil der Fahrbahn liegt.

4. Einrichtung nach Anspruch 3, **dadurch gekennzeichnet, dass** die Lage und/oder Größe des eingeblendeten Bildes (25', 13, 14) derart sind, dass das eingeblendete Bild (25', 13, 14) als Fortsetzung des unmittelbar sichtbaren Bildes (9) sichtbar ist.

5. Einrichtung nach einem der vorhergehenden Ansprüche, **dadurch gekennzeichnet, dass** die Lage des eingeblendeten Bildes (25', 13, 14) von der durch die jeweilige Beleuchtung durch die Scheinwerfer (7) gegebenen Helldunkelgrenze (8) abhängt.

6. Einrichtung nach Anspruch 5, **dadurch gekennzeichnet, dass** die Stellung eines Abblendschalters die Abhängigkeit bewirkt.

7. Einrichtung nach Anspruch 5, **dadurch gekennzeichnet, dass** die Abhängigkeit durch Bildverarbeitungsalgorithmen bewirkt wird.

8. Einrichtung nach einem der vorhergehenden Ansprüche, **dadurch gekennzeichnet, dass** die Lage und/oder Größe des eingeblendeten Bildes (25') in Abhängigkeit von der mit Hilfe eines Sensors (22) ermittelten Position der Augen (3) des Fahrzeugführers gesteuert werden.

9. Einrichtung nach einem der vorhergehenden Ansprüche, **dadurch gekennzeichnet, dass** das wiedergegebene Bild (25) kleiner als die Bildfläche (26) der Bildwiedergabeeinrichtung ist und auf dieser verschiebbar ist.

10. Einrichtung nach einem der vorhergehenden Ansprüche, **dadurch gekennzeichnet, dass** das wiedergegebene Bild (25) synthetische Graphikelemente enthält.
